(19) **Europäisches Patentamt / European Patent Office / Office européen des brevets**

(11) **EP 4 776 140 A1**

(12) # EUROPEAN PATENT APPLICATION

(43) Date of publication:
**15.07.2026 Bulletin 2026/29**

(21) Application number: **25305025.6**

(22) Date of filing: **09.01.2025**

(51) International Patent Classification (IPC):
**G06F 11/3668** (2025.01)    **G06N 20/00** (2019.01)

(52) Cooperative Patent Classification (CPC):
**G06F 11/3684; G06F 11/3676; G06N 20/00**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Expleo France**
**78180 Montigny-le-Bretonneux (FR)**

(72) Inventors:
• **SERVUS, Jorg**
**3130 Herzogenburg (AT)**
• **PANDIAN, Suresh**
**600 099 Kolathur Chennai (IN)**
• **MANZANO-AGUILAR, Marti**
**63000 Clermont-Ferrand (FR)**

• **BENABIDALLAH, Raounak**
**91120 Palaiseau (FR)**
• **SHAHKARAMI, Abtin**
**75116 Paris (FR)**
• **BARRUCQ, Christophe**
**31300 Toulouse (FR)**
• **HAMEED, Shahul**
**78180 Montigny le Bretonneux (FR)**
• **BONAFOUS, Pierre**
**78310 Coignières (FR)**
• **MAHADEVAN, Ramesh**
**600 033 Chennai (IN)**

(74) Representative: **Santarelli**
**Tour Trinity**
**1 bis Place de la Défense**
**92400 Courbevoie (FR)**

(54) **COMPUTERIZED METHOD AND SYSTEMS FOR GENERATING TEST CASES FOR A SOFTWARE**

(57) The invention relates to a computerized method for generating test cases for a software from a specification using a large language model (LLM), the method comprising processing the specification using the LLM, by detecting a software specification type, evaluating a quality level of the specification, depending on the quality level of the specification, modifying the specification to improve the quality level, the evaluation of the quality level and the modification of the specification depending on the software specification type. The method further comprise generating test cases, based on the specification, using the LLM, wherein the generation of each test case is performed using a set of successive prompts, at least one prompt of the set of successive prompts depending on outputs of the LLM answering to previous prompts of the set of successive prompts.

[Fig. 1]

EP 4 776 140 A1

## Description

**Technical** field

The present disclosure generally relates to the field of software development, and more specifically, to the use of large language models for improving software quality and reduce development time through automatic generation of software test cases.

Prior art

In the field of software development, quality assurance is a pivotal aspect that ensures the reliability and functionality of the software. This process often involves the creation and execution of test cases, which are specific conditions or variables under which a software program is tested to verify its functionality and performance. Test cases are typically designed to cover all possible scenarios, from the simplest to the complex, to ensure that the software behaves as expected and that no unanticipated issues arise.

A common practice in software testing is the use of software specification comprising, in one form or another, requirements as a basis for generating test cases. Software requirements specify the functions and constraints of a software. They provide a clear understanding of what the software is expected to do and not do, and serve as a foundation for designing test cases that can effectively validate the software's functionality and verify that the software meets its expected characteristics.

However, the process of creating test cases based on software requirements can be laborious and time-consuming, often requiring a deep understanding of the software's functionality and the specific conditions under which it operates. This process is typically manual, involving the interpretation of software requirements and the design of test cases that accurately reflect these requirements.

In recent years, artificial intelligence (AI) has been increasingly leveraged in the field of software development to automate and enhance various aspects of the development process. One such application of AI is the use of large language models (LLMs), which are AI models capable of understanding and generating human-like text as code text in many known computer languages. LLMs, such as transformer-based models, have shown promise in various natural language and code processing tasks, including the generation of test cases based on software requirements.

Transformer-based models, such as GPT-3, GPT-4, BERT, and Llama 2, are a type of deep learning model that are commonly used in natural language processing (NLP) and other applications of generative AI. These models are designed to learn contextual relationships between words in a sentence or text sequence, enabling them to understand and generate text that accurately reflects the given context.

Despite the potential of LLMs in software testing, their application in this field is not straightforward. The generation of high-quality test cases requires not just the ability to understand and generate text, but also a nuanced understanding of the software requirements and the specific conditions under which the software operates. Furthermore, the quality of the generated test cases is often dependent on the quality of the prompts given to the LLM, which can be challenging to optimize.

In summary, while the use of AI and LLMs in software testing presents promising opportunities for automating and enhancing the test case generation process, it also poses several challenges that require careful consideration and innovative solutions.

## Disclosure of the invention

The present invention has for objective to remedy all or a portion of the limitations of the solutions of prior art, in particular those mentioned hereinabove, by proposing a computerized method for generating test cases for a software from a specification using a large language model (LLM).

To this effect, and according to a first aspect, a computerized method for generating test cases for a software from a specification using a large language model (LLM) is provided. The specification describes the software's expected characteristics. The method includes processing the specification using the LLM, which involves detecting a software specification type, evaluating a quality level of the specification, and modifying the specification to improve the quality level, depending on the quality level of the specification. The evaluation of the quality level of the specification and the modification of specification depending on the detected software specification type. The method also includes generating test cases using the LLM based on the specification, where the test cases comprise instructions for verifying that the software meets the expected characteristics. The generation of each test case is performed using a set of successive prompts, with at least one prompt of the set of successive prompts depending on outputs of the LLM answering to previous prompts of the set of successive prompts.

The software can be a wide variety of computerized method with functionalities from an embedded software to a web application. Functionalities which of require verification and validation through testing activities.

The software expected characteristics are for example an intended behavior of the software subjected to different inputs, different states internal variables of the software can take, expected outputs of the software based on the software inputs and a context.

The quality level can be, a quality score of the specification with regards to a criteria or a binary result type such as valid or invalid with regards to a criteria. The quality level can be an overall level achieved by the entire specification or a quality level of a sub set or an elementary element of the specification such as a requirement. The criteria is part of a set of criteria, the set of criteria depending on the software specification type.

The software specification type can be for example a waterfall format which represent structured functional and non-functional specifications of the software to develop or an agile format accounting for an iterative user-centric rationale of the software to develop. The software specification type can also be a combination of previously mentioned type or an industry specific specification format. The software specification type brings its own set criteria to which the specification must abide to achieve a high quality level and ensure a lower risk of errors during the software development.

Thus, the invention enables to generate test cases with greatly reduced effort based on large variety of software specification format, especially software specification written in natural language. In addition, the generated test cases provide a better test coverage of the software and reduce human bias leading to potentially overlooking certain test scenario or edge cases in comparison to traditional test cases manual generation. Hence, the software quality is increased with a reduce time and effort thanks to the invention.

In particular embodiments / modes of implementation, the invention may further comprise one or more of the following features, taken alone or in any technically possible combination.

According to other aspects of the present disclosure, the method may include a step of pre-processing the specification to extract requirements from a media of a media list, which comprises diagram, flowchart, and textual information.

Extracting requirement from diagram, flowchart and textual information allows more flexibility in the software specification used as input for the test cases generation.

The modification of the specification may comprise a syntax & semantic recommendation for a requirement to a user.

Adding a step of requirement syntax & semantic recommendation to a user in the specification modification allows for a greater reliability in the specification modification, the user being able to discard irrelevant specification modifications. It also serves a user education purpose allowing the user to see example of high quality requirement syntaxes.

The generated test cases may follow a format from a format list, which includes a standard format and a Gherkin format.

Generating test cases in a predefined format ease the integration of the invention in an pre-existing software development process.

The software specification type may be selected from a group comprising agile user stories and waterfall requirements.

Agile user stories and waterfall requirements being the two most common specification types, selecting the specification type from this group of specification type further ease the integration of the invention in a pre-existing software development process.

The quality level of the specification may be evaluated with regards to a set of criteria, which for agile user stories software specification type, includes semantic validity, exhaustivity, structuration, and acceptance definition, and for waterfall requirements software specification type, includes expected action definition, concerned component definition, context definition, precondition definition, and expected results definition.

This set of criteria is consistently allowing a reduced error occurrence level during the test case generation as well as during the software development. This set also ensure a minimum potential deviation between the intended software characteristics and the specification interpretation made during test cases generation.

The at least one prompt of the set of successive prompt may be automatically generated based on outputs of the LLM answering to previous prompts of the set of successive prompts.

Generating automatically the at least one prompt of the set of successive prompt based on outputs of the LLM answering to previous prompts allows to further leverage the LLM capabilities, reducing the variability in generated test cases quality and optimizing the generated test cases quality.

The set of successive prompts may be optimized using a dataset comprising evaluations of generated test cases with regards to a group of metrics, the group of metrics comprising clarity, coverage, conciseness and reusability.

Using the optimized set of successive prompts further increase the quality of generated test cases especially with regards to the group of metrics.

The LLM may be selected from a list of available LLMs and the set of successive prompts may be optimized for the selected LLM.

As each LLM have its specificities, optimizing the set of successive prompts for the selected LLM ensure the method and system of the present disclosure produce the highest quality tests cases achievable when leveraging the possibilities of the selected LLM.

The set of successive prompt optimization may involve a reinforcement learning approach.

A reinforcement learning approach for optimizing the set of successive prompts achieve consistent results in the quality of test cases generated using the optimized set of successive prompts.

According to another aspect of the present disclosure, a system for generating test cases for a software from a specification using a large language model (LLM) is provided. The system includes a processing unit configured to communicate with the LLM, a memory unit configured to store the specification, a set of successive prompts, and the generated test cases, an input interface configured to receive the specification, and an output interface configured to provide the generated test cases. The processing unit using the LLM is further configured to detect a software specification type within the specification, evaluate a quality level of the specification, modify the specification to improve the quality level, depending on the quality level of the specification, and generate test cases using the LLM based on the specification. The generation of test cases is performed using the set of successive prompts, with at least one prompt of the set of successive prompts depending on outputs of the LLM answering to previous prompts of the set of successive prompts.

According to other aspects of the present disclosure, the system may include an optimization module, and the optimization module may be configured to produce optimized set of successive prompts using a dataset comprising evaluations of generated test cases with regards to a group of metrics, which includes clarity, coverage, conciseness, and reusability.

The set of successive prompts is optimized by the optimization module to increase the generated test case quality with regards to the group of metrics. The optimization module may comprise a model of test case evaluation trained using the dataset to evaluate generated test case with regards to the group of metrics. The optimization module may then optimize the set of successive prompt by iterating on test case generation using a set of successive prompts with incremental variations and measuring the effect of the incremental variations using the model of test case evaluation.

Using the optimized set of successive prompts further increase the quality of generated test cases especially with regards to the group of metrics.

The input interface and the output interface may be connected to a software development environment, and the processing unit may be further configured to receive instructions from the development environment for integrating the test case generation in a DevOps software development methodology.

Integrating the test case generation in a DevOps software development methodology allows further reducing the software development duration and efforts as the software testing is seamlessly performed when new versions of the software or the specification are recorded in the development environment.

According to yet another aspect of the present disclosure, a non-transitory computer-readable medium storing instructions is provided. When executed by a processor, these instructions cause a system to receive a specification describing a software's expected characteristics, process the specification using a LLM, and generate test cases using the LLM based on the specification. The generation of each test case is performed using a set of successive prompts, with at least one prompt of the set of successive prompts depending on outputs of the LLM answering to previous prompts of the set of successive prompts.

According to other aspects of the present disclosure, the non-transitory computer-readable medium may further store instructions that, when executed by the processor, cause the system to produce optimized set of successive prompts using a dataset comprising evaluations of generated test cases with regards to a group of metrics, which includes clarity, coverage, conciseness, and reusability.

**Presentation of the figures**

The invention will be better understood when reading the following description, given as a non-limiting example, and made with reference to the figures which show :

[FIG. 1] illustrates a flow diagram of the computerized method for generating test cases from a software specification using a large language model, according to an embodiment,

[FIG. 2] depicts a method for evaluating the quality level of a software specification based on type-specific criteria, according to aspects of the present disclosure,

[FIG. 3] shows a flow diagram of a method for optimizing the set of successive prompts used in generating test cases, in accordance with example embodiments,

[FIG. 4] presents a flow diagram of a method for evaluating and processing test cases, according to an embodiment,

[FIG. 5] illustrates a block diagram of a system for generating test cases, according to aspects of the present disclosure.

In these figures, identical references from one figure to another refer to identical or similar elements. For reasons of clarity, the elements shown are not necessarily to the same scale, unless otherwise stated.

**Detailed description of embodiments**

The following description sets forth exemplary aspects of the present disclosure. It should be recognized, however, that such description is not intended as a limitation on the scope of the present disclosure. Rather, the description also encompasses combinations and modifications to those exemplary aspects described herein.

The present disclosure relates to the field of software testing, specifically to the automation of test case generation from software requirements. It represents a novel and beneficial approach to automating the generation of software test cases from a software specification which typically contains requirements, offering improvements in following aspects of the software testing process.

Efficiency and automation: it allows to quickly generate many test cases, covering a considerable range of scenarios, which might be impractical to achieve manually.

Better coverage: Automatically generating many testing scenarios, input combinations and edge cases lead to an increase in test coverage, which may support the identification of potential issues and vulnerabilities in the software that can be overlooked in traditional testing using manually based test cases generation.

Reduction of human bias: Manual test case generation may be influenced by human bias, leading to potentially overlooking certain test scenarios. The present disclosure, being based on generative artificial intelligence, which, at its time, it's a data-driven paradigm, can help minimize such human bias and provide a more objective approach to test case generation.

Resource Optimization: Automated test case generation can optimize resource utilization by focusing on critical paths and scenarios, ensuring that testing efforts are directed where they are most needed.

Time savings: The long-term benefits of the present disclosure include reduced testing phase duration associated with manual effort and the potential for catching issues earlier in the development process.

Improved Software Quality: By providing comprehensive test coverage and identifying potential issues early on, it contributes to overall improved software quality and reliability.

The generation of test cases for a software specification is performed using a set of successive prompts. These prompts are designed to guide the LLM in its task of generating test cases. The set of successive prompts 19 includes a series of instructions or queries that are fed to the LLM in a specific order. The LLM, in response to each prompt, generates an output that forms part of the final test case or influences the generation of subsequent prompts.

At least one prompt in the set of successive prompts 19 depends on the outputs of the LLM answering to previous prompts. This dependency allows for a dynamic and context-aware generation of test cases. For instance, the LLM output 15 from a previous prompt may contain information or insights that are relevant to the generation of the next prompt 16. This information may be used to tailor the next prompt 16 in a way that guides the LLM towards generating a more accurate or relevant test case.

In some embodiments, at least one prompt of the set of successive prompt 19 is automatically generated based on outputs of the LLM answering to previous prompts of the set of successive prompts. The automatic generation of prompt based on previous LLM output can be for example manage through a decision tree such as a tree starting by "generate a test case for requirement x" than "is the generated test case meet criteria x? answer by yes or no" and if the LLM output is "no" than "improve the generated test case to meet criteria x".

In some embodiments, the set of successive prompts is optimized using a dataset comprising evaluations of generated test cases with regards to a group of metrics, the group of metrics comprising clarity, coverage, conciseness and reusability.

This dataset can be populated by generated test case evaluation performed by software testing specialists.

The method of claim 8 wherein the LLM is selected from a list of available LLMs and wherein the set of successive prompts is optimized for the selected LLM.

The list of available LLMs comprise for example, GPT-3, GPT-4, BERT, and Llama 2.

In some embodiments, the set of successive prompts 19 may be optimized to improve the quality of the generated test cases. This optimization process may involve adjusting the content, sequence, or other characteristics of the prompts based on based on the evaluation of the generated test cases. The optimization of the set of successive prompts 19 contributes to the overall efficiency and effectiveness of the test case generation process, leading to high-quality test cases that accurately reflect the software requirements specified in the specification 10.

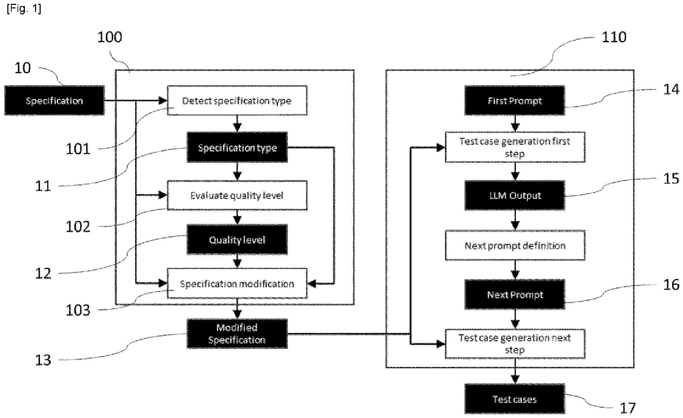

Referring to FIG. 1, the flow diagram illustrates an example implementation of the computerized method for generating test cases for a software from a specification using a large language model (LLM). The method includes two main stages: specification processing 100 and test cases generation 110.

In the specification processing stage 100, the method receives a specification 10 as input. This stage includes detecting a software specification type 101, evaluating a quality level 12 of the specification, and modifying the specification 13 to improve its quality level, if deemed appropriate. The evaluation of the quality level 12, and the modification of the specification 13 are influenced by the software specification type previously detected.

The test cases generation stage 110 takes the processed specification 13 as input. It employs a series of prompts to generate test cases using the LLM. The process begins with a first prompt 14, which initiates the test case generation. The LLM output 15 from this step informs the definition of the next prompt 16. This iterative process continues, with each subsequent prompt and LLM output building upon the previous steps.

Hence, the generation of each test case is performed using a set of successive prompts 19. At least one prompt of the set of successive prompts 19 depends on outputs of the LLM answering to previous prompts of the set. This iterative process allows for a dynamic and context-aware generation of test cases, where the LLM output 15 from a previous prompt may contain information or insights that are relevant to the generation of the next prompt 16.

Here is an example of a set of successive prompt used to produce test cases with an enhance quality: Considering a car safety application test case generation, a system is prompted with context and instructions.

Prompt 1 - Requirement type detection:

Context: You are acting as the product owner of a software project. Your role is to analyze software requirements. You always answer in the most accurate way providing only a valid JSON document. Do not use markdown syntax.

Instructions: Given the following software requirement, delimited by triple backticks:

‴ Accident Reporting Feature Description Users should be able to report accidents through the Car Safety mobile application. The system should prompt users to provide necessary information such as location, time of the accident, description of the event, and upload relevant photos. Upon submission, the system should generate a unique claim ID and notify the insurance company for further processing. Additionally, users should be able to track the status of their accident report and communicate with claims representatives through the app.

Business rules :Only registered users can report accidents. Accidents must be reported within 24 hours of occurrence. Uploaded photos must be in JPEG or PNG format and not exceed 5 MB in size. Duplicate accident reports for the same incident are not allowed. Preconditions User must be logged in to the Car Safety mobile application. User's location services must be enabled to accurately report the accident location.

Expected Results :Upon successful submission, the user receives a confirmation message with the unique claim ID. The Car Safety company is notified immediately about the accident report. Users can view the status of their accident report in the app and receive updates on its progress. Claims representatives can access the submitted accident reports for processing and communication with the user. ‴.

Analyze if it is structured as a user story (structure 'As a..., I want to...' in the requirement's language), or as a traditional software requirement (i.e., waterfall-like requirement).

Provide your assessment in a JSON document with two keys:

- "result", the value of which can be "user_story" or "traditional_requirement".
- "reason", the value of which is a string in passive form explaining your assessment, in one line as maximum.

Response MUST be formatted in a valid JSON only, without additional text.

Prompt 2 - Requirement validation:

Context: You are acting as the product owner of a software project. Your role is to evaluate software requirements. You always answer in the most accurate way providing only a valid JSON document. Please do not enclose json documents in markdown tags.

Instructions: Given the following requirement, delimited by triple backticks:

‴ Accident Reporting Feature Description Users should be able to report accidents through the Car Safety mobile application. The system should prompt users to provide necessary information such as location, time of the accident, description of the event, and upload relevant photos. Upon submission, the system should generate a unique claim ID and notify the insurance company for further processing. Additionally, users should be able to track the status of their accident report and communicate with claims representatives through the app.

Business rules :Only registered users can report accidents. Accidents must be reported within 24 hours of occurrence. Uploaded photos must be in JPEG or PNG format and not exceed 5 MB in size. Duplicate accident reports for the same incident are not allowed. Preconditions User must be logged in to the Car Safety mobile application. User's location services must be enabled to accurately report the accident location.

Expected Results :Upon successful submission, the user receives a confirmation message with the unique claim ID. The Car Safety company is notified immediately about the accident report. Users can view the status of their accident report in the app and receive updates on its progress. Claims representatives can access the submitted accident reports for processing and communication with the user. '''.

Does it include a background or situation where this requirement is relevant?.

Provide your answer in JSON format, with the following template:

```
{
    "criterion": "The requirement includes a background or situation where this
    requirement is relevant.",
    "result": (true/false),
    "reason": (reason for the (non) fulfillment in one line as maximum formulated
    only in passive form)
}.
```

Response MUST be formatted in a valid JSON only, without additional text.

Prompt 3 - Semantic and Syntax Recommendation:

Context: You are acting as the product owner of a software project. Your role is to improve software requirements. Please do not enclose json documents in markdown tags.

Instructions: Given the following requirement, delimited by triple backticks:

''' Accident Reporting Feature Description Users should be able to report accidents through the Car Safety mobile application. The system should prompt users to provide necessary information such as location, time of the accident, description of the event, and upload relevant photos. Upon submission, the system should generate a unique claim ID and notify the insurance company for further processing. Additionally, users should be able to track the status of their accident report and communicate with claims representatives through the app.

Business rules :Only registered users can report accidents. Accidents must be reported within 24 hours of occurrence. Uploaded photos must be in JPEG or PNG format and not exceed 5 MB in size. Duplicate accident reports for the same incident are not allowed. Preconditions User must be logged in to the Car Safety mobile application. User's location services must be enabled to accurately report the accident location.

Expected Results :Upon successful submission, the user receives a confirmation message with the unique claim ID. The Car Safety company is notified immediately about the accident report. Users can view the status of their accident report in the app and receive updates on its progress. Claims representatives can access the submitted accident reports for processing and communication with the user. '''.

Provide an improved version taking into account the following quality rules:

- The requirement includes a background or situation where this requirement is relevant.

Provide your answer in rich markdown format. Do not infer non-existant requirements or features but focus only on improving the provided requirement.

Your response must be exclusively generated in English. You are not allowed to use in any other language. Do not say anything else before and after the improved requirement.

Prompt 4 - Test cases generation:

Context: You always format your answers in markdown language.

Instructions: Given the improved requirement generate a set of comprehensive Gherkin-syntax test cases that cover all possible scenarios described in either for user stories or traditional requirements.

For the Gherkin User Story:

The test cases should be written from the user's point of view with complete sentences, and different steps should be connected via the keyword "AND" to avoid hierarchical structure. , e.g. 'Given I ... When I ... Then I ...'.

For the Gherkin Traditional:

The test cases should be written from a software engineer perspective with complete sentences, e.g. 'Given the customer ... When the customer ... Then ...'.

Avoid using specific names or details in test cases. Instead, use generic terms to ensure the test cases are applicable to a variety of situations.

Your response must be exclusively generated in English. You are not allowed to use in any other language.

Please use the following test Cases template (do not add the ′″markdown tag):

```
##### **Feature:** [Feature Description]
###### **Scenarios:**
  - **Scenario 1:** [Scenario Title]
    - **Given** [pre-condition 1 AND pre-condition 2 AND pre-condition 3 ...]
    - **When** [actions 1 AND actions 2 AND actions 3 ...]
    - **Then** [expected outcomes 1 AND expected outcomes 2 AND expected
    outcomes 3 ...]
  - **Scenario 2:** [Another Scenario Title]
    - **Given** ...
    - **When** ...
    - **Then** ....
```

Different steps should be connected via the keyword "AND" to maintain clarity and avoid hierarchy. Avoid using specific names or details in test cases. Instead, use generic terms to ensure the test cases are applicable to a variety of situations. Only the keywords "Given", "when", "then" and "and" must be kept in English. Don't add any information before and after the test cases.

Ensure that each test case generated is unique and does not replicate any previously generated test cases or their equivalents.

The method produces test cases 17 as its final output. These test cases are derived from the original specification, incorporating any modifications made during the specification processing stage, and are generated through the iterative prompting process in the test case generation stage. This structure allows for tailored handling of different specification formats while maintaining a consistent overall process flow.

In some aspects, the method may also include a pre-processing step to extract requirements from a media of a media list, which includes diagrams, flowcharts, and textual information. This pre-processing step can help to ensure that all relevant information is captured and processed, regardless of the format in which it is initially provided and provides flexibility in admissible input specification formats. This processing step can be performed for example by leveraging the latest image and diagram interpreting AI models such as the ones provided by OpenAI.

In other aspects, the method may also include a step of pre-validating the specification to determine if it constitutes a valid software specification. This pre-validation step can help to filter out invalid or irrelevant inputs, ensuring that the subsequent processing and test case generation steps are based on valid and relevant software specification. It can be performed using a set of automatic control such as "does the specification contains text or diagrams?" and then "can this text or diagrams be interpreted as requirements?".

In other aspects, the step of evaluating the quality level of the specification may be based on a set of quality criteria. These quality criteria vary depending on the detected software specification type, and may include factors such as clarity, comprehensiveness, and adherence to a specific syntax or structure. The evaluation of the quality level help to ensure that the specification meets the desired standards, and inform the subsequent modification of the specification, if deemed appropriate. This modification step can involve providing a syntax & semantic recommendation for a requirement to a user, which can help to improve the clarity, comprehensiveness, or adherence to a specific syntax or structure of the requirement.

In other aspects, the generated test cases may follow a format from a format list, which may include a standard format and a Gherkin format.

A standard test case format typically includes several key components designed to describe what is to be tested, how it should be tested, and the expected result. Here is an example of a standard test's case format:

Test Case ID: TC-001

Test Case Name: Verify the login functionality with valid credentials

Preconditions:

- The user must be registered on the platform.
- The test environment should have an accessible login endpoint.

Test Steps:

1. Open the web browser.
2. Navigate to the login page of the application.
3. Enter a valid username in the 'Username' field.

4. Enter the corresponding valid password in the 'Password' field.
5. Click on the 'Login' button.

Expected Result:

- The system should authenticate the user successfully.
- The user should be redirected to the homepage/dashboard after a successful login.

Actual Result:

[To be filled after executing the test]

Test Data:

- Username: testuser@example.com
- Password: correctPassword123!

Postconditions:

- The user should be logged in and have access to features based on their user role.

Status (Pass/Fail):

[To be filled after executing the test]

Comments/Notes:

- [Any additional information or observations during test execution]

Tester Name:

- [Name of the person executing the test]

Date of Execution:

- [Execution date]

Environment:

- [Details of the environment in which the test is being executed, such as Browser version, OS, etc.]

Attachments:

- [Screenshots, error logs, or any other relevant files captured during testing]

This example outlines the structure to be followed when documenting a test case. Each field is clearly defined to ensure that anyone reading or executing the test case understands its purpose and the steps involved. It's important to note that actual results, status, and comments are filled in after the test case execution.

Different organizations may have variations of this format to fit their own processes and tools, but the fundamental parts remain the same. Some may require additional sections like "Traceability" to link the test case to requirements or "Priority" to indicate the criticality of the test case.

Gherkin format is a structured, English-like language used to define test cases in Behavior-Driven Development (BDD). It uses a set of keywords to describe the behavior of the application in a way that can be easily understood by both non-technical stakeholders and developers.

Here is an example of a test case written in the Gherkin syntax:
Feature: User Login

Scenario: Successful login with valid credentials

Given the user is on the login page
When the user enters valid username and password
And the user clicks on the login button
Then the user should be directed to the dashboard

Scenario: Login attempt with invalid credentials

Given the user is on the login page
When the user enters an invalid username or password
And the user clicks on the login button
Then the user should see an error message "Invalid credentials"

Scenario: Login attempt with a locked account

Given the user is on the login page
And the user has an account that is locked
When the user attempts to log in with the correct username and password
Then the user should see a message "Your account is locked"

The Gherkin syntax allows test cases to be written in a way that is easily understood, and they can also be directly executed using BDD tools like Cucumber.

In other aspects, the method may also include a phase of optimizing the set of successive prompts used in generating test cases. This optimization step can involve adjusting the content, sequence, or other characteristics of the set of successive prompts based on an evaluation of the generated test cases. The optimization of the set of successive prompts helps to improve the quality of the generated test cases and to reduce the variability in the generated. A step of evaluating the generated test cases based on a set of quality criteria is implemented to produce the evaluation of generated test cases used to inform the optimization phase. These quality criteria may include factors such as clarity, coverage, conciseness, and reusability.

The set of successive prompts can be optimized, for example, using an AI-assisted feedback loop. The AI-assisted feedback loop is an iterative process that combines human expertise, specifically from Subject Matter Experts (SMEs) and AI specialists, with the generative capabilities of LLMs. The core idea is to continuously improve the prompts given to the test case generation LLM based on feedback, by using another LLM to generate optimized prompts. This process further enhances the quality of the output test cases.

The AI-assisted feedback loop consists of the following key steps:

- Initial Prompt Generation: Crafting an initial manual prompt;
- Test Case Generation: Use of the test case generation LLM to generate test cases from the prompt and software requirement;
- Quality Evaluation: Assessment of the generated test cases by SMEs using predefined quality metrics;
- Feedback Collection: Collection of feedback from SMEs and AI specialists regarding the quality and completeness of the test cases;
- Prompt Optimization: Using an LLM guided by a carefully constructed meta-prompt that incorporates the feedback, to generate an optimized prompt;
- Iteration: Repeating the process to progressively improve the prompt and the resulting test cases.

The iterative process continues until one or more of the following conditions are satisfied:

- a quality score meets or exceeds a predefined threshold;
- a change in quality score between iterations falls below another predefined threshold;
- a maximum number of iterations is reached.

The meta-prompt includes:

- the prompt used in the previous iteration;
- an aggregated feedback from SMEs and AI specialists;
- specific instructions that direct the LLM on how to improve the prompt based on the aggregated feedback such as a task description, optimization objectives and formatting guidelines.

The optimization of the set of successive prompts can, for example, be algorithmically represented as:

[Math. 1]

$$u = software\ requirements$$

**Initialize** $p_0$ (initial manual prompt)

Set k = 0

Do

$t_k = F(u, p_k)$          // Generate test cases using LLM $F$

$q_k = Q(t_k, u)$          // Evaluate quality

$\Delta q_{SME} = \text{SME}_{Feedback}(T_k, u)$      // Collect SME feedback

$\Delta q_{AI} = \text{AI\_Specialist}_{Feedback}(p_k, T_k, u)$      // Collect AI specialist feedback

$\Delta Q = \Delta q_{SME} \cup \Delta q_{AI}$          // Aggregate feedback

$\text{Meta\_Prompt} = \text{Construct\_Meta\_Prompt}(p_k, \Delta Q)$      // Build meta-prompt for LLM $G_p$

$p_{k+1} = G_p(\text{Meta\_Prompt})$      // Generate optimized prompt using LLM $G_p$

$k = k + 1$

While $(q_k < Q_{threshold})$ and $(|q_k - q_{k-1}| \geq \varepsilon)$ and $(k < K_{max})$

The enhanced test case quality provided by the optimized set of successive prompt can, for example, comprise the following benefits:

- Comprehensive Coverage: Addresses more scenarios and edge cases;
- Improved Clarity: Produces clearer and more precise test cases;
- Alignment with Requirements: Ensures test cases meet domain-specific needs.

The following table shows the progression of prompts quality over five epochs, each epoch consisting of several iterations. As the table shows, at the end of the 5th epoch, the resulting prompt provided us with noticeably higher quality in all the criteria compared to initial manually engineered prompt.

[Tab. 1]

|  | Init. Manu al | Epoch 1 | Epoch 2 | Epoch 3 | Epoch 4 | Epoch 5 |
|---|---|---|---|---|---|---|
| **Clarity/Understandibil ity** | 7 | 8 | 7 | 9 | 9 | 7 |
| **Structured Gherkin Syntax** | 9 | 7 | 7 | 0 | 5 | 10 |
| **User Centered** | 8 | 10 | 10 | 10 | 9 | 9 |
| **Coverage** | 4 | 7 | 6 | 8 | 7 | 7 |
| **Independent** | 9 | 9 | 8 | 9 | 9 | 9 |
| **Concise** | 7 | 7 | 8 | 9 | 9 | 9 |
| **Reusability** | 8 | 8 | 9 | 9 | 8 | 8 |
| **Efficiency & Simplicity** | 6 | 7 | 7 | 7 | 9 | 7 |
| **Overall Score** | 7.38 | 8.05 | 7.84 | 7.79 | 8.23 | 8.34 |

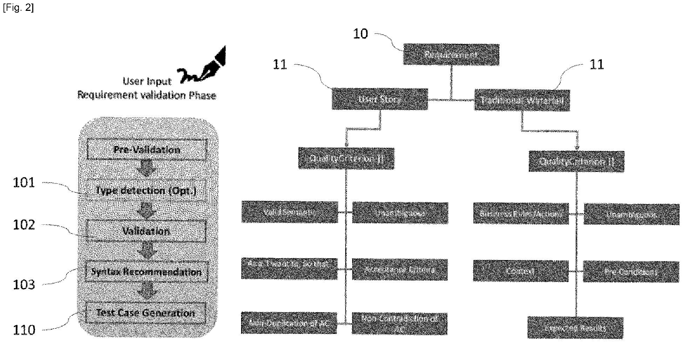

Referring to FIG. 2, the diagram illustrates an example implementation of the computerized method for generating test cases, emphasizing the evaluation of the quality level 12 of the software specification. In this example, the specification is split into individual requirements, and each one is processed separately. The diagram shows an evaluation phase also called validation phase followed by two main branches representing different specification types: User Story and Traditional Waterfall.

The two main branches stemming from the requirement at the top represent different specification types. Each branch has its own set of quality criteria, illustrating how the quality level evaluation 12 depends on the detected specification type 11.

For the User Story branch, the quality criteria include Valid Semantic, Unambiguous, "As a, I want to, So that" structure, Acceptance Criteria (AC), Non-Duplication of AC, and Non-Contradiction of AC. These criteria are designed to ensure that the requirement, called a user story in this branch, is clear, concise, and accurately represents the user's perspective and desired outcome.

The Traditional Waterfall branch includes quality criteria such as Business Rules/Actions, Unambiguous, Context, Pre-Conditions, and Expected Results. These criteria are designed to ensure that the traditional waterfall requirements are comprehensive, clear, and accurately represent the software's expected functionality.

These criteria help to prevent misunderstandings when interpreting and testing the specification.

In some cases, if the specification does not fulfill all the quality rules during the evaluation phase, the modification of the specification 13 may include providing a syntax & semantic recommendation for a requirement to a user. This syntax & semantic recommendation can help to improve the clarity, comprehensiveness, or adherence to a specific syntax or structure of the specification.

In some aspects, the software specification type 11 is selected from a group comprising agile user stories and waterfall requirements. This selection can be based on the format and content of the specification, and can inform the subsequent evaluation and modification of the specification, as well as the generation of test cases.

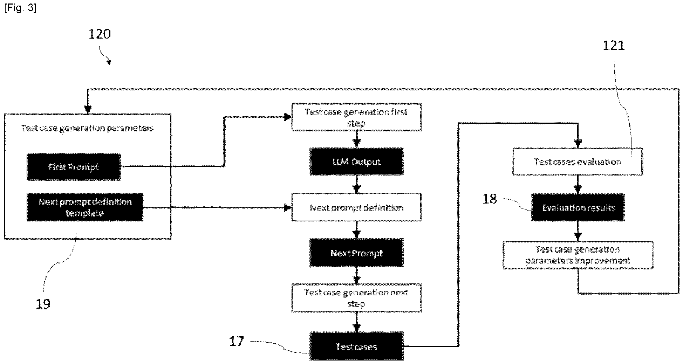

Referring to FIG. 3, the diagram illustrates an example implementation of a method for optimizing the set of successive prompts 19 used in generating test cases 17. The diagram depicts an iterative process comprising test case generation using a set of successive prompt, test case evaluation and modification of the set of successive prompts.

The method begins with using test case generation parameters comprising a first prompt 14 and a next prompt definition template. The set of successive prompts corresponds to the test case generation parameters of this example. The process initiates with a test case generation first step, producing an LLM output 15. This output in combination with the next prompt definition template is then used to define the next prompt 16 , leading to subsequent test case generation steps.

The generated cases 17 are then evaluated to produce evaluation results. Based on these results, the test case generation parameters are improved.

The method operates in an iterative manner, with the output of the test case generation feeding into the evaluation process, and the evaluation results influencing future test case generation parameters. This structure allows for a continuous cycle of generating, evaluating, and refining test cases, ultimately optimizing the set of successive prompts 19 used in the test case generation process.

The set of successive prompts 19 is optimized using a dataset comprising evaluations of generated test cases 17 with regards to a group of metrics. The group of metrics includes clarity, coverage, conciseness, and reusability. These metrics provide a comprehensive assessment of the quality of the generated test cases 17, and the feedback from these evaluations is used to refine and optimize the set of successive prompts 19.

In some cases, the LLM 205 is selected from a list of available LLMs, and the set of successive prompts 19 is optimized for the selected LLM. This allows the method to leverage the specific capabilities and strengths of the selected LLM, enhancing the quality and effectiveness of the generated test cases 17.

In some embodiments, the set of successive prompts 19 optimization involves a reinforcement learning approach. This approach involves using feedback from the evaluation of the generated test cases 17 to guide the optimization of the set of successive prompts 19. The reinforcement learning approach enables the method to continuously learn and improve the set of successive prompts 19 based on the performance of the generated test cases 17, leading to more effective and high-quality test case generation.

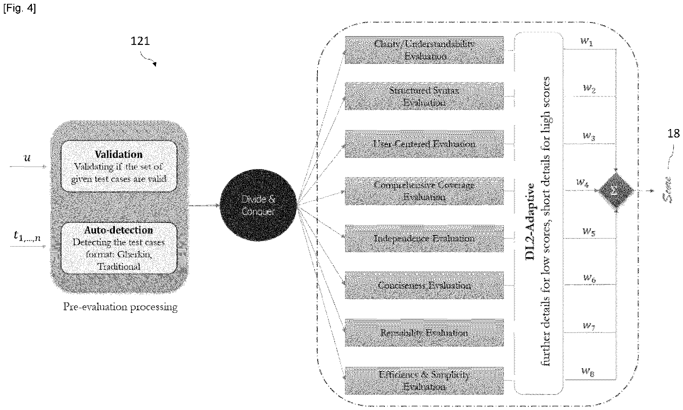

Referring to FIG. 4, the diagram illustrates a flow diagram of a method for evaluating test cases. The method comprises two main stages: a pre-evaluation processing stage and an evaluation stage.

In the pre-evaluation processing stage, the method includes two steps. The first step is a pre-validation step to determine if the given test cases 17 are valid. This pre-validation step can help to filter out invalid or irrelevant inputs, ensuring that the subsequent processing and evaluation steps are based on valid and relevant software test cases. The second step is an auto-detection step to identify if the test cases format is Gherkin or Traditional. This auto-detection step can help to streamline the specification processing stage by automatically determining the format of the test cases, which can then be used to apply the relevant evaluation criteria in the evaluation stage.

The evaluation stage consists of multiple evaluation steps, each assessing a specific aspect of the test cases. These evaluation steps include Clarity/Understandability, Structured Syntax, User-Centered Design, Comprehensive Coverage, Test Case Autonomy, Brevity, Modular Design, and Streamlined Efficiency. Each of these evaluation steps is assigned a specific weight, reflecting its relative importance in the overall evaluation process.

The results from these evaluation steps are aggregated to produce a final score using a weighted scoring approach. This approach involves calculating a weighted average of the scores achieved across the evaluation steps, with each score multiplied by the corresponding weight.

The final weighted average score is the result of these calculations and serves as a comprehensive indicator of the test case's quality, accounting for the relative weights assigned to each evaluation criterion..

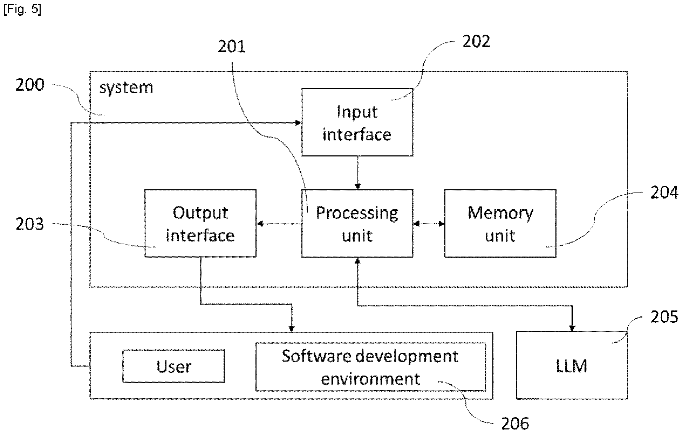

Referring to FIG. 5, the block diagram illustrates a system for generating test cases 200 for a software from a specification using a large language model (LLM). The system 200 includes a processing unit 201, an input interface 202, an output interface 203, and a memory unit 204. The processing unit 201 is connected to the input interface 202, output interface 203, and memory unit 204. The system 200 also interfaces with a large language model (LLM) 205 and a software development environment 206.

The input interface 202 is configured to receive a specification 10 describing the software's expected characteristics. This specification 10 may be provided by a user or an external system, such as a software development environment 206. The specification 10 serves as the basis for the test case generation process, providing the software requirements that the test cases are intended to verify.

The processing unit 201 is configured to communicate with the LLM 205. This communication may involve sending prompts to the LLM 205, receiving outputs from the LLM 205, and processing these outputs to generate test cases or to inform the generation of subsequent prompts. The processing unit 201 can handle the computational tasks involved in the test case generation process, leveraging the capabilities of the LLM 205 to analyze the specification and generate insights that can inform the subsequent steps of the test case generation process.

The memory unit 204 is configured to store the specification 10, a set of successive prompts 19, and the generated test cases 17. This storage can help to preserve the inputs and outputs of the test case generation process, and can provide a record of the process that can be used for future reference or analysis.

The output interface 203 is configured to provide the generated test cases 17. These test cases 17 can be provided to a user or to an external system, such as a software development environment 206. The provision of the test cases 17 as output can facilitate the integration of the test case generation process into software development workflows, and can provide a tangible output that can be used for further testing or development activities.

In some aspects, the input interface 202 and the output interface 203 are connected to a software development environment 206. The processing unit 201 is further configured to receive instructions from the development environment 206 for integrating the test case generation in a DevOps software development methodology. This integration can streamline the software development process, enabling the seamless generation and utilization of test cases within the software development environment 206.

In some embodiments, the system 200 further comprises an optimization module. The optimization module is configured to produce optimized set of successive prompts 19 using a dataset comprising evaluations of generated test cases 18 with regards to a group of metrics. The group of metrics may include clarity, coverage, conciseness, and reusability. These metrics provide a comprehensive assessment of the quality of the generated test cases 17, and the feedback from these evaluations is used to refine and optimize the set of successive prompts 19. This optimization process can improve the efficiency and effectiveness of the test case generation process, leading to high-quality test cases that allows to accurately test the software meets the requirements specified in the specification 10.

**Claims**

1. A computerized method for generating test cases for a software from a specification using a large language model (LLM), the specification describing the software's expected characteristics, the method comprising :

    - processing the specification using the LLM, by performing following sub steps:

        ◦ detect a software specification type,
        ◦ evaluate a quality level of the specification,
        ◦ depending on the quality level of the specification, modify the specification to improve the quality level,

    the evaluation of the quality level and the modification of the specification depending on the software specification type,
    - generating test cases using the LLM based on the specification, the test cases comprising instructions for verifying that the software meets the expected characteristics,
    wherein the generation of each test case is performed using a set of successive prompts, at least one prompt of the set of successive prompts depending on outputs of the LLM answering to previous prompts of the set of successive prompts.

2. The method of claim 1 comprising a step of pre-processing the specification to extract requirements from a media of a media list, the media list comprising diagram, flowchart and textual information.

3. The method of claim 1 wherein the modification of the specification comprise a syntax & semantic recommendation for a requirement to a user.

4. The method of claim 1 wherein the generated test cases follow a format from a format list, the format list comprising a standard format and a Gherkin format.

5. The method of claim 1 wherein the software specification type is selected from a group comprising agile user stories and waterfall requirements.

6. The method of claim 5 wherein the quality level of the specification is evaluated with regards to a set of criteria, the set of criteria comprising, for agile user stories software specification type, semantic validity, exhaustivity, structuration and acceptance definition and for waterfall requirements software specification type, expected action definition, concerned component definition, context definition, precondition definition and expected results definition.

7. The method of claim 1 wherein the at least one prompt of the set of successive prompt is automatically generated based on outputs of the LLM answering to previous prompts of the set of successive prompts.

8. The method of claim 1 wherein the set of successive prompts is optimized using a dataset comprising evaluations of generated test cases with regards to a group of metrics, the group of metrics comprising clarity, coverage, conciseness and reusability.

9. The method of claim 8 wherein the LLM is selected from a list of available LLMs and wherein the set of successive prompts is optimized for the selected LLM.

10. The method of claim 8 wherein the set of successive prompt optimization involves a reinforcement learning approach.

11. A system for generating test cases for a software from a specification describing the software's expected characteristics using a large language model (LLM), the system comprising:

- a processing unit configured to communicate with the LLM,
- a memory unit configured to store the specification, a set of successive prompts and the generated test cases,
- an input interface configured to receive the specification,
- an output interface configured to provide the generated test cases,

wherein the processing unit using the LLM is further configured to:

- detect a software specification type within the specification,
- evaluate a quality level of the specification,
- depending on the quality level of the specification, modify the specification to improve the quality level,
the evaluation of the quality level of the specification and the modification of the specification depending on the detected software specification type,
- generate test cases using the LLM based on the specification, the test cases comprising instructions for verifying that the software meets the expected characteristics,

the generation of test cases being performed using the set of successive prompts, at least one prompt of the set of successive prompts depending on outputs of the LLM answering to previous prompts of the set of successive prompts.

12. The system of claim 11 wherein the input interface and the output interface are connected to a software development environment and wherein the processing unit is further configured to receive instructions from the development environment for integrating the test case generation in a DevOps software development methodology.

13. The system of claim 11 comprising an optimization module and wherein the optimization module is configured to produce optimized set of successive prompts using a dataset comprising evaluations of generated test cases with regards to a group of metrics, the group of metrics comprising clarity, coverage, conciseness and reusability.

14. A non-transitory computer-readable medium storing instructions that, when executed by a processor, cause a system to:

- receive a specification describing a software's expected characteristics,
- process the specification using a LLM, by performing following sub steps:

  ◦ detect a software specification type,
  ◦ evaluate a quality level of the specification,
  ◦ depending on the quality level of the specification, modify the specification to improve the quality level,

the evaluation of the quality level and the modification of the specification depending on the software specification type,
- generate test cases using the LLM based on the specification, the test cases comprising instructions for verifying that the software meets the expected characteristics,
the generation of each test case being performed using a set of successive prompts, at least one prompt of the set of successive prompts depending on outputs of the LLM answering to previous prompts of the set of successive prompts.

15. The non-transitory computer-readable medium of claim 14 further storing instructions that, when executed by the processor, cause the system to produce optimized set of successive prompts using a dataset comprising evaluations of generated test cases with regards to a group of metrics, the group of metrics comprising clarity, coverage, conciseness and reusability.

[Fig. 1]

[Fig. 2]

[Fig. 3]

120

121

Test case generation parameters

First Prompt

Next prompt definition template

19

Test case generation first step

LLM Output

Next prompt definition

Next Prompt

Test case generation next step

17

Test cases

Test cases evaluation

18

Evaluation results

Test case generation parameters improvement

[Fig. 4]

[Fig. 5]

## EUROPEAN SEARCH REPORT

**Application Number**

EP 25 30 5025

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JUNWEI LIU ET AL: "Large Language Model-Based Agents for Software Engineering: A Survey", ARXIV.ORG, CORNELL UNIVERSITY LIBRARY, 201 OLIN LIBRARY CORNELL UNIVERSITY ITHACA, NY 14853, 4 September 2024 (2024-09-04), XP091876744, * Sections 4.1, 5.1.3, 5.1.4; figure 1 * | 1-15 | INV. G06F11/3668 G06N20/00 |
| A | HAOLIN JIN ET AL: "From LLMs to LLM-based Agents for Software Engineering: A Survey of Current, Challenges and Future", ARXIV.ORG, CORNELL UNIVERSITY LIBRARY, 201 OLIN LIBRARY CORNELL UNIVERSITY ITHACA, NY 14853, 5 August 2024 (2024-08-05), XP091844269, * abstract * * Section IV.A; figure 4 * | 1-15 | |

**TECHNICAL FIELDS SEARCHED (IPC)**

G06F
G06N

The present search report has been drawn up for all claims

| Place of search | Date of completion of the search | Examiner |
|---|---|---|
| Munich | 3 June 2025 | Hoareau, Samuel |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)